# EUROPEAN PATENT SPECIFICATION

(11) **EP 1 756 817 B1**
(45) Date of publication and mention of the grant of the patent: **16.12.2009**
(21) Application number: 05737466.2
(22) Date of filing: 13.05.2005
(51) Int. Cl.: G11B 7/26, B29D 17/00, B29C 65/52

(54) **METHOD FOR PRODUCING A MULTILAYER STORAGE MEDIA**
VERFAHREN ZUR HERSTELLUNG EINES MEHRSCHICHTIGEN SPEICHERMEDIUMS
PROCEDE DE PRODUCTION D'UN SUPPORT DE STOCKAGE MULTICOUCHE

(30) Priority: 18.05.2004 US 572194 P
(43) Date of publication of application: 28.02.2007
(73) Proprietor: Singulus Technologies AG, 63796 Kahl am Main (DE)
(72) Inventor: HEINZ, Bernd, CH-9470 Buchs (CH)
(74) Representative: Vossius & Partner
(86) International application number: PCT/CH2005/000272
(87) International publication number: WO 2005/112020

(56) References cited:
- EP-A- 1 518 899
- WO-A-98/08220
- PATENT ABSTRACTS OF JAPAN vol. 2003, no. 01, 14 January 2003 (2003-01-14) & JP 2002 251803 A (ORIGIN ELECTRIC CO LTD), 6 September 2002 (2002-09-06)

## Description

This invention concerns optical data storage media, especially in optical disc production, such as DVD-14/18, DVD R DL and other multilayer media.

### Background of the invention

The common way to produce a dual layer single side DVD (like a DVD-9) is to bond two 0.6mm substrates together, each of which is carrying an information layer. Another way to manufacture a double layer disk is the so called "2P process". Instead of forming one layer in each (two) substrate, the 2P process gives rise to a single substrate structure with two internal information layers. This is not necessary for DVD-9 production, but for other multilayer formats like DVD14/18 or DVDR9.

### Related Art

US 6,117,284 and US 6,309,496 describe general information relating to the 2P process.

In the first step of the 2P process a first substrate with an information layer is produced by injection moulding and coated with a layer material which is appropriate for the format. Then a second substrate is produced with a second information layer. This second substrate is then bonded together with the first substrate using typically an UV-curing adhesive. In the next step the 2 (bonded) substrates are separated whereby the UV resin with the image of the information layer of the second substrate must remain completely at the first substrate. Depending on the application it is also possible to transfer a metallic layer in a similar way from the second to the first substrate.

For a good stamping result and an easy separation, the choice of materials of the UV-curing adhesive and of the second substrate is important. Whereas polycarbonate is typically used for the first substrate, PMMA or other non-polar materials are used for the second substrate.

However, the UV curing adhesive used between the first and second substrate has to fulfil several requirements. On the one hand the material should give good stamping results, one the other hand the material should exert minimal mechanical stress on the first substrate after the separation process to avoid a bending of this substrate. A certain amount of stress will be unavoidable due to the shrinkage process usually occurring during curing.

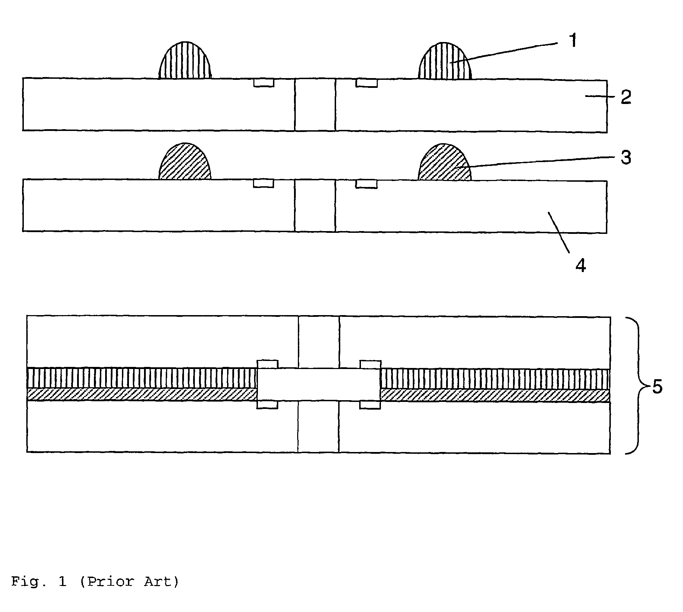

Due to the difficulty to achieve good replication and minimal bending with one curing adhesive the bonding layer can be produced by using 2 different adhesives. One with optimised elastic properties will be coated onto the first substrate and a second one, optimised for replication properties, will be coated onto the second substrate. Preferably the thickness ratio of the first and second adhesive should be unequal. The thickness of the first adhesive has to be maximised to avoid the unwanted contribution of the second adhesive to the bending of the substrate which is increasing with increasing thickness. To give an example: The required thickness of a bonding layer for DVD R DL media is 50µm, this can be produced by bringing 40µm of the first adhesive onto the first substrate and 10 µm of the second adhesive onto the second substrate and bond them together (see e. g. Fig. 1).

In state-of-the-art experiments, as described e. g. in US 6,136,133, the two adhesives are brought onto the substrates at the same time and then they are bonded together using one curing step. This method requires only few process steps but has some disadvantages. High reliability of the bonding process and cleanness of the outer edge of the disc is difficult to achieve when using a first and a second adhesive with significant different thicknesses.

WO 98/08220 describes a process for assembling two sided optical disks comprising the steps of providing a first and second element, applying acurable adhesive to one surface of at least one of said elements, curing said adghesive to form a tacky adhesive and finally placing said tacky adhesive into contact with a surface of the other element.

EP 1 518 899 A2 describes the composition of an actinic radiation curable adhesive as well as a process for bonding an adherend A and a different adherent B using such adhesive.

### Brief description of the drawings

Figure 1 shows a Prior Art situation of a bonding process
Figure 2 shows one embodiment of the inventive process.

### Summary of the invention

To avoid the disadvantage of the state of the art solution for the 2P process with two different adhesives, the following method is suggested. A first adhesive, preferably one with good replication properties, is spin-coated onto the adequate substrate and cured with UV-light in a first curing step. In the next step this coated substrate is bonded together with the remaining substrate using the second adhesive. This step is a standard bonding step finished by a second curing step.

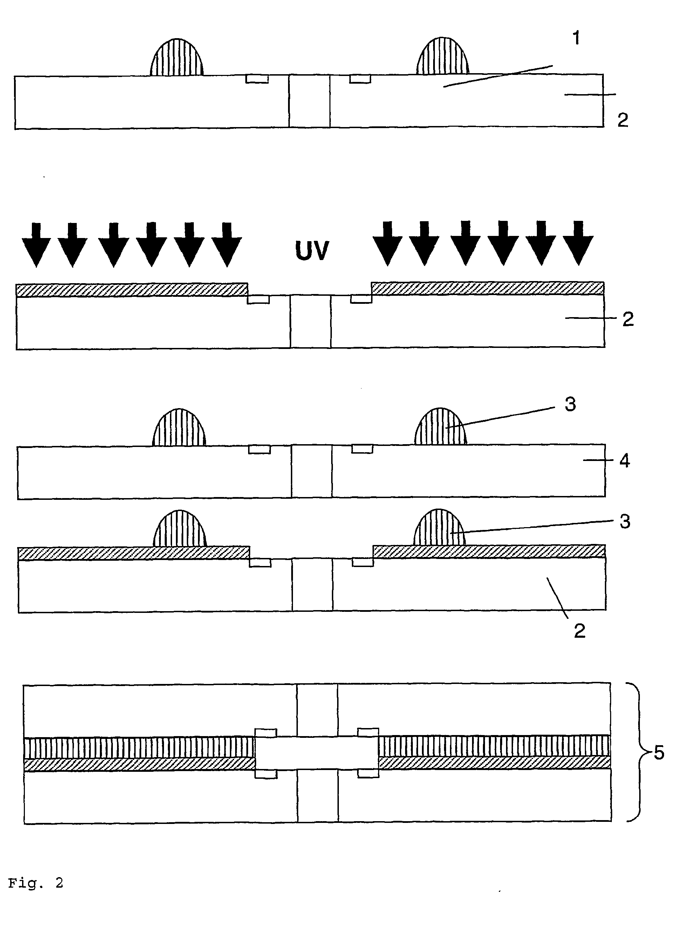

With the aid of figure 2 a preferred embodiment is being shown in detail. An inventive method for producing a disc shaped workpiece comprises the steps of producing a first and a second disc-shaped substrate, applying a first adhesive 1, adapted to allow for replication, at least partially onto one of the flat sides of said first substrate 2, curing said first adhesive and applying a second, different adhesive 3 at least partially onto at least one of the flat sides of said first 2 or second substrate 4. Said second, different adhesive is adapted to provide for elastic properties to avoid bending of the substrate after a separation process. In a final step said substrates are being bonded to form said disc shaped workpiece 5. Later said disc shaped workpiece may be cured again.

The invention divides the task of making a composite bonding layer into two steps which can be well controlled, the coating process and the bonding process. Thereby the process problems connected with the existing method are solved. The reliability of the bonding process and the cleanness of the outer edge of the finished disk will be increased.

## Claims

1. A method for producing a disc shaped workpiece (5) comprising the steps of:
a) Producing a first disc-shaped substrate (2) and a second disc-shaped substrate (4);
b) Applying a first adhesive (1), adapted to allow for replication, at least partially onto one of the flat sides of said first substrate (2);
c) Curing said first adhesive (1);
d) Applying a second, different adhesive (3), at least partially onto at least one of the flat sides of said first (2) or second substrate (4), said adhesive adapted to provide for elastic properties to avoid bending of the substrate after a separation process;
e) Bonding said substrates to form said disc shaped workpiece (5).

2. Method according to claim 1, further comprising the step of f) Curing said disc shaped workpiece.

## Patentansprüche

1. Verfahren zum Herstellen eines scheibenförmigen Werkstücks (5) mit den Schritten:
a) Herstellen eines ersten scheibenförmigen Substrats (2) und eines zweiten scheibenförmigen Substrats (4);
b) Aufbringen eines ersten Klebstoffs (1), der dazu geeignet ist, eine Kopie zu ermöglichen, mindestens teilweise auf eine der flachen Seiten des ersten Substrats (2);
c) Aushärten des ersten Klebstoffs (1);
d) Aufbringen eines anderen, zweiten Klebstoffs (3) mindestens teilweise auf mindestens eine der flachen Seiten des ersten Substrats (2) oder des zweiten Substrats (4), wobei der zweite Klebstoff dazu geeignet ist, elastische Eigenschaften bereitzustellen, um eine Biegung des Substrats nach einem Trennungsprozess zu vermeiden;
e) Verkleben der Substrate, um ein scheibenförmiges Werkstück (5) herzustellen.

2. Verfahren nach Anspruch 1, ferner mit dem Schritt f) zum Aushärten des scheibenförmigen Werkstücks.

## Revendications

1. Procédé de production d'une pièce de fabrication en forme de disque (5), comprenant les étapes consistant à :
a) produire un premier substrat en forme de disque (2) et un deuxième substrat en forme de disque (4) ;
b) appliquer un premier adhésif (1), adapté pour permettre une réplication, au moins partiellement sur l'une des faces plates dudit premier substrat (2) ;
c) faire durcir ledit premier adhésif (1) ;
d) appliquer un deuxième adhésif différent (3), au moins partiellement sur au moins l'une des faces plates dudit premier (2) ou deuxième (4) substrat, ledit adhésif étant adapté pour offrir des propriétés élastiques afin d'éviter une flexion du substrat après une opération de séparation;
e) coller lesdits substrats pour former ladite pièce de fabrication en forme de disque (5).

2. Procédé selon la revendication 1, comprenant, en outre, l'étape consistant à :
f) faire durcir ladite pièce de fabrication en forme de disque.
